# EUROPEAN PATENT APPLICATION

(11) **EP 4 765 048 A1**
(43) Date of publication of application: **24.06.2026**
(21) Application number: 24222059.8
(22) Date of filing: 20.12.2024
(51) Int. Cl.: G06V 20/56, G06V 10/44, G06V 10/46, G06V 10/50

(54) **METHOD FOR DETECTING OCCLUSION OF A CAMERA, METHOD FOR MONITORING FUNCTIONALITY OF A CAMERA, A DATA PROCESSING APPARATUS, A COMPUTER PROGRAM, A COMPUTER-READABLE STORAGE MEDIUM, AND A VEHICLE**

(71) Applicant: Volvo Car Corporation, 405 31 Göteborg (SE)
(72) Inventor: EKDAHL, Jonas, 40531 Göteborg (SE)
(74) Representative: Kransell & Wennborg KB

(57) **Abstract**

The disclosure relates to a method for detecting occlusion of a camera and to a method for monitoring functionality of a camera. The method for detecting occlusion of a camera comprises: obtaining image data indicative of an image captured by the camera; extracting, from the image data, of a first information indicative of features in the image data; and assessing, by a statistical model, whether or not at least a portion of the camera is obscured based on a second information indicative of quantities of features in the first information. Furthermore, the present disclosure relates to a data processing apparatus, a computer program, and a computer-readable storage medium, each comprising corresponding means for carrying out the steps of at least one of the methods. Additionally, the present disclosure relates to a vehicle comprising the camera and the data processing apparatus.

## Description

### TECHNICAL FIELD

The present disclosure relates to a method for detecting occlusion of a camera and to a method for monitoring functionality of a camera. Furthermore, the present disclosure relates to a data processing apparatus, a computer program, and a computer-readable storage medium, each comprising corresponding means for carrying out the steps of at least one of the methods. Additionally, the present disclosure relates to a vehicle comprising the camera and the data processing apparatus.

### BACKGROUND ART

More and more cameras are deployed inside or outside different objects. The objects may comprise vehicles, for example. Independent of whether a camera is located inside or outside an object (e.g., vehicle), camera occlusion may occur for different reasons. For example, a camera may be blocked by other objects. Also dirt, snow, ice, condensation, moisture, fog, and/or mist etc. on a camera or camera lens may be a reason for camera occlusion. A camera may be also damaged or misaligned, for example, and this circumstance will lead to camera occlusion as well. As the cameras are more and more frequently used different systems performing different tasks (e.g., analysis or sensing tasks) autonomously, methods are required that may detect camera occlusions in a fast, efficient, and resource-saving way.

### SUMMARY

The present disclosure solves the problem of improving the detecting of camera occlusion and, thereby, also of improving monitoring functionality of a camera. The improving of the detecting of camera occlusion may encompass detecting camera occlusions in a fast, efficient, and/or resource-saving way.

The problem is at least partially solved or alleviated by the subject matter of the independent claims of the present disclosure, wherein further examples are incorporated in the dependent claims.

According to a first aspect, there is provided a method for detecting occlusion of a camera. The method comprises the following steps: obtaining image data indicative of an image captured by the camera; extracting, from the image data, of a first information indicative of features in the image data; and assessing, by a statistical model, whether or not at least a portion of the camera is occluded based on a second information indicative of quantities of features in the first information.

The camera occlusion is a broadly discussed topic among the skilled persons. Generally, the camera occlusion occurs when an object or thing partially or completely blocks camera's field of view, i.e. when objects, things, or parts of a scene are not visible from a camera's viewpoint due to being blocked or occluded by other objects or things. Also dirt, dust, or debris on a camera lens may be a reason for camera occlusion. Further, first and foremost for externally mounted cameras, in winter conditions, snow or ice buildup around the camera may lead to camera occlusion. Similarly, condensation or moisture on the camera lens, fog or mist, physical damage or misalignment of the camera, etc. may lead to camera occlusion. These occlusions or obstructions respectively can significantly impact the performance of systems relaying on correctly functioning cameras. The present disclosure is appropriate for detecting any kind of camera occlusions.

The present disclosure enables detecting camera occlusion from camera's field of view as image data of images captured by the camera is used for the detecting. Generally, the skilled person is aware of the meaning of the term image data. The term of image data, indicative of an image captured by the camera, means image data that is a digital representation of the captured image in a structured format. As well known, the image data consists in general of pixel data. Additionally, the image data may comprise also metadata. The pixel data/information may represent the color and intensity of light at each point in the image. Each pixel can be defined by multiple channels (e.g., RGB for color images) and can vary in depth (e.g., 8-bit, 16-bit), affecting the range of colors represented. Aw well known, the image data can be organized in different dimensions, such as 2D (standard images), 3D (volumetric data), or even higher dimensions that include time and other variables. The metadata of the image data is well known as well and may provide context for the pixel data, including details about the image type (e.g., TIFF, JPEG), dimensions, acquisition settings (like exposure time and hardware used), and other relevant parameters that help interpret the image correctly. The metadata may be used for determining how the image was captured and what conditions may have influenced the quality and content of the captured image. The image data can be stored in various file formats as well known by the skilled person. Common formats may include, for example TIFF, JPEG, and/or PNG, wherein any other appropriate image file formats may be used according to the present disclosure.

The detecting of camera occlusion based on image data of images captured by the camera improves the quality of results of the camera occlusion detection, i.e. improves the reliability of the camera occlusion detection because the detection is done from camera's field of view.

Further, the detection of camera occlusion may be performed in a fast, efficient, and/or resource-saving way due to the use of a statistical model, which is a fast, efficient, and resource saving analysis tool. A fast, efficient, and/or resource-saving camera occlusion detection is achieved also because a quantitative and no in-depth analysis (i.e., qualitative analysis) of the features of the image data is performed. Focusing on feature quantities increases the camera occlusion detection efficiency and decreases the amount of resources (e.g., storage and/or computing resources) required for executing the camera occlusion detection.

The method may be at least partly computer-implemented, and may be implemented in software or in hardware, or in software and hardware. Further, the method may be carried out by computer program instructions running on means that provide data processing functions. The data processing means may be any suitable computing means, such as an electronic control module etc., which may also be a distributed computer system. The data processing means or the computer, respectively, may comprise one or more of a processor, a memory, a data interface, or the like.

According to an example, the camera may be mounted on or in a vehicle. Vehicles use cameras for different purposes. For example, cameras in and/or on vehicles serve a variety of essential functions that enhance safety, provide assistance to drivers, and/or improve overall driving experience. For example, cameras are used in advanced driver-assistance systems, ADAS, for surveillance and recording, for parking assistance, for improving visibility during low-light conditions, for adjusting vehicle's lighting based on environmental conditions (e.g., during night driving or adverse weather conditions), for safety monitoring, and/or for fleet management. There are many further functions supported by cameras in or on vehicles, and cameras have become integral components of modern vehicles, contributing significantly to safety, convenience, and efficiency on the road. Their ability to function effectively under various conditions is crucial for the advancement of autonomous driving technologies as well. Correspondingly, detecting of camera occlusion for cameras mounted on and/or in vehicles is essential for a correct execution of the different and essential functions in the vehicle, supported by the cameras.

According to an example, the features in the image data may be image features; and/or the features in the image data may be features of different types of image features; and/or each quantity of the quantities of features in the first information may indicate a number of features that are of at least one particular type of image features. Thereby, the camera occlusion detection may be performed with different degrees of granularity and with a high variability of features that are taken into consideration. Moreover, the camera occlusion detection described herein is universally applicable to any camera, regardless of whether it is installed indoors or outdoors and regardless of the purpose for which the camera is used.

According to an example, the different types of image features may comprise at least one of the following types: edges, corners, textures, shapes, colors, transform-based features, local feature descriptors, interest points, and/or objects.

According to an example, the statistical model assesses that at least a portion of the camera is occluded by comparing a quantity of a set of the quantities of features with a corresponding threshold for the respective quantity. Thus, only quantities of features are compared with respective threshold values, which takes considerably less time and considerably less computing resources on deciding on whether or not the camera is occluded in comparison to methods that rely on more complex analysis of the features themselves and/or that are based on artificial intelligence (AI) or machine learning (ML) models requiring more storage and computational resources and more computations for meeting an appropriate decision with regard to presence or absence of camera occlusion, i.e., for meeting an appropriate decision on whether or not the camera is occluded.

According to an example, the statistical model is a Bayesian statistical model, a random forests model, or a decision tree model. Also any other appropriate statistical model could be used according to the present disclosure. The use of the statistical models has an efficiency advantage because they require less storage and processing resources than methods that rely on more complex analysis of the features themselves and/or that are based on artificial intelligence (AI) or machine learning (ML) models, for example, requiring more storage and computational resources and more computations for meeting an appropriate decision with regard to presence or absence of camera occlusion.

According to an example, the feature extraction may be performed using at least one of a group of feature extraction processes. For example, the group of feature extraction processes may comprise at least one of the following: MinEigen, BRISK, FAST, Harris, LBP, GLCM, HOG, Gabor, SIFT, SURF, BRIEF, ORB, HSV, YCbCr, LAB, Canny, Sobel, Laplacian, Shi-Tomasi, FFT, DCT, DWT, RANSAC, KLT, PCA, t-SNE, UMAP, CNN, ResNet, VGG, YOLO, RCNN, UNet, OF, STIP, FD, ZFD, HOG, FAST, BRIEF, ORB, HSV, and/or MSER. The exemplary feature extraction processes as listed above are well known to the skilled person. The present disclosure, however, is not limited to the above-listed exemplary feature extraction processes/tools only and may utilize any one, or a combination, of further appropriate feature extraction processes or tools. Thereby, the present disclosure enables a modular implementation where different further feature extraction process(es) or tool(s) can be added for performing the feature extraction and/or any one of already used feature extraction process(es) or tool(s) can be removed and may, thus, not used for performing the feature extraction. For example, if a more efficient process or tool is present, it may be easily integrated. If a process or tool is outdated and/or inefficient it may be easily removed. Similarly, the adding or removal of tool(s) or process(es) may be performed in view of features extraction of which is required. Thus, specific tool(s) or process(es) can be selected in view of features, extraction of which is desired. In the following, some of the above-listed exemplary feature extraction processes/tools are explained in more detail.

MinEigen process is arranged for extracting, for example, corner features from 2-D grayscale or binary images using minimum eigenvalue algorithm developed by Shi and Tomasi. Said algorithm identifies points in the image data, where the minimum eigenvalue of the gradient covariance matrix is above a certain threshold, indicating potential corner points. The extracted features may be returned as a corner points object, which contains information about these detected corner features in the image data.

The BRISK (Binary Robust Invariant Scalable Keypoints) process is arranged, for example, for extracting several distinct image features, which are crucial for tasks like image matching and object recognition. The features that BRISK may extract may comprise, for example, at least one of the following sampling patterns, key points, descriptor compositions, rotation invariance, intensities of sampling points, etc.

The FAST (Accelerated Segment Test) process is arranged, for example, for corner detection, for example. Thus, features extracted by the FAST algorithm may comprise, for example, interest points or corners in the image, which can be used for tracking and mapping objects in various computer vision tasks.

The Harris process is arranged, for example, for extracting corner features from images. For example, the Harris process may identify corners as key points in the image. Corners may be defined as points where there is a significant change in intensity gradient in multiple directions, making them distinct and stable features. Further, the Harris process may detect gradient variations, for example, i.e. it may detect regions in the image, where there are large intensity variations in all possible directions, which are indicative of corners.

The LBP (Local Binary Pattern) process is arranged, for example, for extracting texture features from images. The LBP may encode in the image local texture information by comparing intensity of a central pixel with intensity of its surrounding neighbor pixels. Features, extracted by LBP, may include, for example, at least one of the following: edge patterns, corner patterns, flat areas (featureless regions), uniform patterns (representing continuous regions), and/or non-uniform patterns (representing more complex textures), etc.

The GLCM (Gray Level Co-occurrence Matrix) process is arranged, for example, for extracting texture features from images. The GLCM may analyze the spatial relationship between pairs of pixels in an image and, thus, may be useful for texture analysis. Features, extracted by GLCM, may include, for example, at least one of the following: contrast features (e.g., by measuring local variations in a gray-level co-occurrence matrix, the contrast features may reflect intensity contrast between a pixel and its neighbor pixels over the whole image), correlation features (e.g., by assessing how correlated a pixel is with regard to its neighbor pixel(s) over the entire image, the correlation features measure the joint probability occurrence of specified pixel pairs), energy (e.g., Angular Second Moment) features (energy represents, for example, the sum of squared elements in the GLCM, also known as uniformity, and may indicate the textural uniformity of an image), homogeneity (e.g., Inverse Difference Moment) features (e.g., by evaluating closeness of distribution of elements in the GLCM to its diagonal, wherein the homogeneity features may reflect how uniform an image is), entropy features (quantifying, for example, the randomness or disorder within an image, wherein a higher entropy value indicates more complexity and less predictability in texture of the image), and/or dissimilarity features (which may be similar to contrast features and which may measure/indicate how different each element is from every other element in the GLCM), etc.

The HOG (Histogram of Oriented Gradients) process is arranged, for example, for extracting features focusing on shape and/or structure of objects in the image. The features, extracted by the HOG, may comprise, for example, at least one of the following: gradient orientation (occurrence(s)), local shape information, histogram(s) of gradient directions, block normalization, spatial and orientation binning, etc.

The Gabor process is arranged, for example, for extracting features that are related to texture and/or orientation in the image.

The SIFT (Scale-Invariant Feature Transform) process is arranged, for example, for detecting key points in the image.

The SURF (Speeded-Up Robust Features) process is arranged, for example, for detecting blob-like structures in the image, which may comprise identifying regions where a significant change in intensity is present in the image that may be indicative of corners and blobs in the image.

The BRIEF (Binary Robust Independent Elementary Features) process is arranged, for example, for extracting binary descriptors from image patches.

The ORB (Oriented FAST and Rotated BRIEF) process is arranged, for example, for extracting key points and binary descriptors from the image.

The HSV (Hue, Saturation, Value) process is arranged, for example, for extracting color based features in the image, wherein the color based features may comprise, for example, at least one of the following: hue, saturation, and/or value (also known as brightness).

The YCbCr process is arranged, for example, for extracting at least one of the following features in the image: luminance (Y), chrominance blue difference (Cb), chriminance red difference (Cr).

The LAB process is arranged, for example, for extracting at least one of the following features in the image: color information, where L represents lightness, A represents green to red dimensions, and B represents blue to yellow dimensions, and/or perceptual uniformity. The LAB process may enhance edge detection and/or image segment detection in the image.

The Canny process is arranged, for example, for extracting edge features from the image. Canny may identify and/or highlight boundaries or edges of objects within the image by detecting areas of rapid intensity change. Features extracted by Canny may comprise at least one of the following: edge boundaries, gradient information, and/or multi-scale edges, etc.

The Sobel process is a widely used technique in the image processing and is arranged for edge detection in the image, for example.

The Laplacian process is a widely used technique in the image processing and is arranged, for example, for detecting at least one of the following features: edges, blurriness, and/or corners.

The Shi-Tomasi process is arranged, for example, for extracting corner features in the image.

The FFT (Fast Fourier Transform) process is arranged, for example, for extracting at least one of the following features: frequency components, amplitude and phase information, low and high frequencies, and/or power spectrum.

The DCT (Discrete Cosine Transform) process is arranged, for example, for extracting spectral information from the image, converting 2D spatial information into frequency domain features. The features extracted by the DCT process may comprise, for example, at least one of the following: texture patterns, edges, low-frequency components, image energy, and/or spatial frequency, etc.

The DWT (Discrete Wavelet Transform) process is arranged for extracting at least one of the following features, for example: color features (e.g., color distribution, color spaces, and/or dominant color patterns), texture features, and/or shape features.

The RANSAC (Random Sample Consensus) process utilizes different known feature extraction processes for extracting image features and is further arranged recognizing objects in the image as complex image features.

The KLT (Kanade-Lucas-Tomasi) process is arranged for extracting features in the image comprising at least one of the following, for example: corners, feature points, eigenvalues of the gradient matrix, spatial intensity information, etc.

The PCA (Principal Component Analysis) process is arranged, for example, for identifying in the image directions (principal components) along which the variance of the data is maximized, for determining uncorrelated principal components in the image, and/or for creating "eigenfaces," which are principal components derived from a dataset of face images and which represent most significant features (e.g., eyes, nose, mouth) in face recognition and can be utilized for identifying individuals based on their facial characteristics.

The t-SNE (t-Distributed Stochastic Neighbor Embedding) process and/or the UMAP (Uniform Manifold Approximation and Projection) process may be used for handling high-dimensional image data by reducing it to a lower-dimensional space, typically two or three dimensions, which may improve efficiency of further image processing for extracting features in the image data.

The ResNet (Residual Networks) process is arranged for mage classification and feature extraction, for example. The ResNet process may extract features such as low-level, mid-level, and/or high-level features, for example, wherein low-level features may comprise edges, textures, and/or colors, for example, mid-level features may comprise shapes and/or parts of obj ects, for example, and high-level features may comprise entire objects or scenes, for example.

The utilization of the CNN (Convolutional Neural Network) for image processing and/or feature extraction is generally well known. The CNN may also extract features such as the low-level, mid-level, and/or high-level features, for example.

The VGG (Visual Geometry Group) process or model is a deep convolutional neural network used for image feature extraction. The VGG may be used for extracting objects and/or image segments, for example.

The YOLO (You Only Look Once) process uses a deep convolutional neural network to extract features at multiple scales and may extract features such as the low-level, mid-level, and/or high-level features, for example.

The RCNN (Region-Based Convolutional Neural Network) process or tool is arranged, for example, for extracting objects in images.

The UNet process or tool is a deep learning architecture and may be used for image segmentation, for example. The U-Net may extract, for example, hierarchical features that represent different levels of abstraction, from edges and textures to more complex patterns. The U-Net may be used for capturing the context of the image, for example.

The OF (Optical Flow) process is arranged, for example, for extracting motion-related features. The OF may extract, for example, at least one of the following: motion vectors, pixel-level displacements, temporal gradients, and/or spatial gradients etc.

The STIP (Spatio-Temporal Interest Points) process is arranged, for example, for extracting specific features from images. The STIP may recognize, for example, actions (such as specific movements or activities), objects, and/or anomalies in the images.

The FD (fractial dimension) process is arranged, for example, for extracting features related to the texture, for example.

The ZFD (Zettabyte File System) process is arranged, for example, for extracting key points and/or local feature descriptors around each key point.

The HOG (Histogram of Oriented Gradients) process is arranged, for example, for extracting local shape information from regions within an image. Specifically, HOG may capture the distribution of gradient orientations in localized portions of an image. The features extracted by HOG may be, for example, at least one of the following: edge directions and magnitudes, local intensity gradients, object contours and shapes.

The FAST (Features from Accelerated Segment Test) process is arranged, for example, for extracting corner features from images.

The BRIEF (Binary Robust Independent Elementary Features) process is arranged, for example, for describing image features. The BRIEF is known as feature descriptor and may be used for encoding local image patches into compact binary strings.

The ORB (Oriented FAST and Rotated BRIEF) process is a feature detection and description algorithm and is arranged for extracting several image features. The ORB may be used, for example, for key point detection, orientation assignment to each key point, and/or descriptor extraction.

The HSV ( Hue, Saturation, Value) color space may be useful for extracting certain image features due to its ability to separate color information (hue) from intensity (value). The HSV may extract, for example, at least one of the following features: hue, saturation, and/or value (also known as brightness).

The MSER (Maximally Stable Extremal Regions) process is arranged, for example, for extracting blob-like features from images.

As mentioned, the above-listed processes/tools are well-known such that the skilled person understands how to use them for feature extraction. Additionally, the present disclosure is not limited to the above-listed processes/tools and also any other further appropriate process may be used for feature extraction according to the present disclosure.

According to a second aspect, there is provided a method for monitoring functionality of a camera by performing the steps of the method of the first aspect, wherein the method further comprises causing an output of an indication of presence of an occluded camera if the assessment indicates that at least a portion of the camera is occluded.

According to a third aspect, there is provided a data processing apparatus comprising means for carrying out the steps of the method of the first aspect and/or of the method of the second aspect.

According to a fourth aspect, there is provided a computer program comprising instructions which, when the program is executed by a computer, cause the computer to carry out the steps of the method of the first aspect and/or of the method of the second aspect.

According to a fifth aspect, there is provided a computer-readable storage medium comprising instructions which, when executed by a computer, cause the computer to carry out the steps of the method of the first aspect and/or of the method of the second aspect.

According to a fifth aspect, there is provided a vehicle comprising a camera and the processing apparatus according to the third aspect.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows exemplary components, by use of which the present disclosure can be implemented according to an example of the present disclosure;
- Figure 2: shows steps of a method for detecting occlusion of a camera according to an example of the present disclosure;
- Figure 3: shows steps of a method for monitoring functionality of a camera according to an example of the present disclosure;
- Figure 4: shows an arrangement of a data processing apparatus according to an example of the present disclosure;
- Figure 5: shows an arrangement of a vehicle according to an example of the present disclosure;
- Figures 6A: shows an exemplary image used for determining whether the camera that captured said image is occluded or not according to an example of the present disclosure;

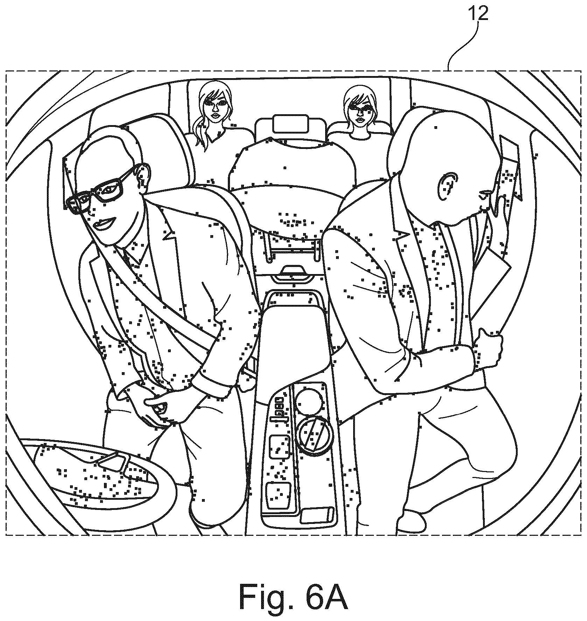

- Figures 6A: shows an exemplary image used for determining whether the camera that captured said image is occluded or not according to an example of the present disclosure; and
- Figures 6A: show exemplary image used for determining whether the camera that captured said image is occluded or not according to an example of the present disclosure.

### DETAILED DESCRIPTION

The Figures are merely schematic representations and serve only to illustrate examples of the disclosure. Identical or equivalent elements are in principle provided with the same reference signs.

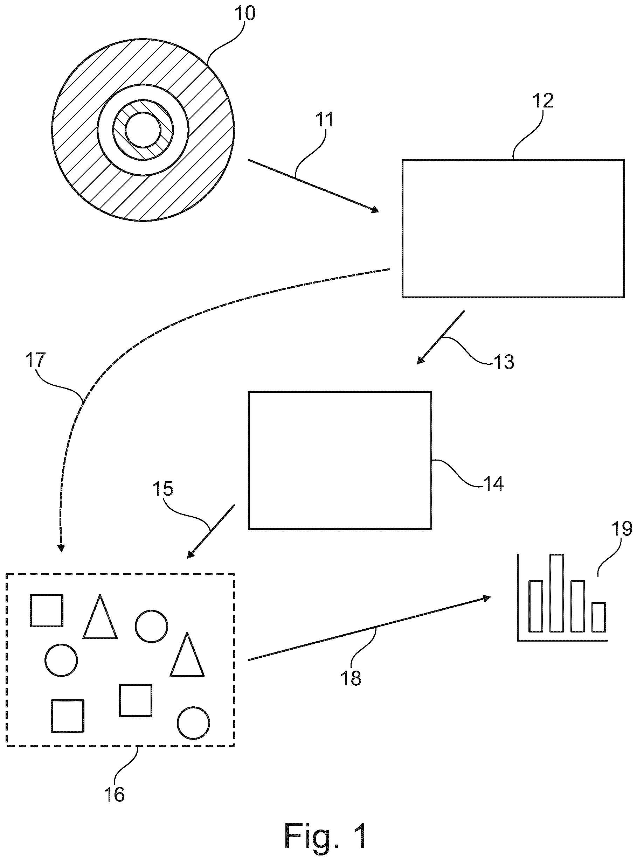

Figure 1 shows exemplary components, by use of which the present disclosure can be implemented according to an example of the present disclosure. In Figure 1, monitoring functionality of camera 10 is performed. Particularly, occlusion of the camera 10 may be detected according to the example of Figure 1.

The camera 10 may be arranged inside or outside an object. The object may be a car, for example. The camera 10 is configured for capturing images 12, which may be used for further analysis purposes. In a vehicle, for example, one or more cameras 10 and images 12, captured by the one or more cameras 10, may be utilized for multiple essential purposes such as enhancing safety, driving assistance, improving driving experience, and/or providing valuable data etc.

In the example of Figure 1, image data 12 indicative of an image captured by the camera 10 is obtained, which is indicated by arrow 11. As indicated above, the image data 12, indicative of an image captured by the camera 10, is a digital representation of the image captured by the camera. In view of this, the terms image data and image may be used interchangeably herein as the image data 12 is the image in a digital form.

Upon obtaining the image or image data 12 respectively, (at least a part of) the image data 12 is used for extracting, from the image data 12, a first information 16 indicative of features in the image data 12. Reference sign 16 is hereinafter used to indicate both first information and features (the first information being indicative of features).

In Figure 1, the different features are schematically indicated as different geometric figures in the rectangle representing the first information 16. The features 16 in the image data 12 are image features. Further, the features 16 in the image data 12 may be features of different types of image features. For example, the different types of image features comprise at least one of the following types: edges, corners, textures, shapes, colors, transform-based features, local feature descriptors, interest points, and/or objects. The present disclosure is not limited to these image feature types only. Features of any other appropriate image feature type, not listed above explicitly, may be extracted according to the present disclosure and present in the first information 16 indicative of features in the image data 12. The extracting or obtaining of the first information 16, indicative of features in the image data 12, from the image data 12 is generally indicated by the interrupted line 17 in Figure 1.

The extracting, from the image data 12, of the first information 16 indicative of features in the image data 12 may be performed using at least one of a group of feature extraction processes/tools 14. The feature extraction from image data 12 is generally well known. Thus, any one of (well known), or a combination of, feature extraction processes or tools 14 respectively that is arranged for image feature extraction may be utilized by the present disclosure. Combining more than one feature extraction processes or tools may for example be used for increased accuracy, confidence or for redundancy.

As indicated above, the feature extraction processes or tools 14 respectively may comprise at least one of the following: MinEigen, BRISK, FAST, Harris, LBP, GLCM, HOG, Gabor, SIFT, SURF, BRIEF, ORB, HSV, YCbCr, LAB, Canny, Sobel, Laplacian, Shi-Tomasi, FFT, DCT, DWT, RANSAC, KLT, PCA, t-SNE, UMAP, CNN, ResNet, VGG, YOLO, RCNN, UNet, OF, STIP, FD, ZFD, HOG, FAST, BRIEF, ORB, HSV, and/or MSER. As explained above, also any other appropriate feature extraction process or tool 14 may be utilized according to the present disclosure.

According to the example of Figure 1, (at least a part) of the image data 12 may be passed 13 to a corresponding at least one feature extraction process or tool 14 respectively. The at least one feature extraction process or tool 14 extracts then from the image data 12 the first information 16 indicative of features in the image data 12. The extraction of the features 16 in the image data 12 by the at least one feature extraction process or tool 14 and, thereby, provision of the first information 16 by the at least one feature extraction process or tool 14 is indicated by arrow 15 in Figure 1. The first information 16 may be understood as a set of features of the image data 12.

Upon the obtaining of the first information 16 or the set of features of the image data 12 respectively, (at least a part of) the first information 16 indicative of features in the image data or (at least a part of) the set 16 of the features of the image data 12 respectively may be provided (see arrow 18 in Figure 1) to a statistical model 19.

The statistical model 19 may assess whether or not at least a portion of the camera 10 is occluded based on a second information indicative of quantities of features in the first information 16 or the set 16 of the features of the image data 12 respectively.

According to the present disclosure, a quantity of the quantities of features in the first information 16 may indicate a number of features 16 that are of at least one particular type of image features.

For example, when considering edges as a particular type of image features 16, there may be a threshold of edges defined for an image that may be used for deciding on whether or not at least a portion of the camera 10 is occluded. The threshold of edges may be compared with the number of edges extracted from the image data 12 and indicated in the first information 16. For example, if the number of the extracted edges indicated in the first information 16 and extracted from the image data 12 is above the threshold of edges, it may be determined that the camera 10 is not occluded due to the assumption that a sufficient amount objects with respective edges is present in the image data 12. Further, there may be another threshold of edges that is higher than the threshold of edges and, if the number of the extracted edges indicated in the first information 16 and extracted from the image data 12 is above the another threshold of edges, it may be determined that the camera 10 is occluded due to the assumption that from a certain (high) number of edges in the image 12, the camera 10 must be dirty or otherwise occluded.

Similar approach is possible also with regard to any one of the features or types of the features in the image 12. Extraction, in the image data 12, of numbers of corners, of particular texture values, of numbers of shapes, of numbers of different colors, of numbers of interest points, and/or numbers of objects, numbers or values of transform-based features, and/or numbers of local feature descriptors etc. may be performed and, based on these quantities a decision on absence or presence of camera occlusion may be made when comparing the quantities with corresponding thresholds.

Said analysis of the quantities of the features 16 detected in the image data 12 is performed by use of the statistical model 19. The statistical model 19 may assess that at least a portion of the camera 10 is occluded by comparing a quantity of a set of the quantities of features with a corresponding threshold for the respective quantity.

According to the present disclosure, the statistical model 19 may be, for example, a Bayesian statistical model, a random forests model, or a decision tree model, wherein also any other appropriate statistical model may be used according to the present disclosure.

In a Bayesian statistical model, for example, knowledge about (distribution of) quantities of image features indicating occluded camera 10 and/or about (distribution of) quantities of image features indicating that the camera 10 is not occluded may be present. The Bayesian statistical model uses the knowledge to infer, with regard to the second information indicative of quantities of features in the first information 16 or the set 16 of the features of the image data 12 respectively, whether or not the camera 10 is occluded.

The inferring based on Bayesian statistical models as such is generally well known.

A random forests model is a supervised machine learning (ML) process used for classification tasks and is as such well known. According to the present disclosure, the random forests model may be a model that has been trained to classify, based on image feature data, whether or not a camera 10 is occluded. Particularly, the random forests model is trained based on quantities of image features present in an image to classify whether or not a camera 10 is occluded. During the training, multiple decision trees are constructed with regard to the image feature quantities. The training of the random forests model and the generation of the multiple decision trees as such are well-known and are, therefore, not described in more detail herein.

Thus, when quantities of features in the first information 16 or in the set 16 of the features of the image data 12 respectively are obtained, they may be passed to the random forest model as input data such that the random forest model may classify based on its decision trees whether or not the camera 10 is occluded. In the random forests model, each decision tree of the random forests model makes its own prediction based on the rules it has learned from image feature quantities in a respective training subset. The final prediction on whether or not the camera 10 is occluded is determined by majority voting among the decision trees. Each tree votes for a corresponding label (i.e., occluded camera 10 or not occluded camera 10), and the label with the most votes becomes the final prediction.

In comparison to the random forests model, the decision tree model is a single tree-like model where decisions are made based on feature values, leading to different outcomes at the leaf nodes of the tree of the decision tree model. The decision tree model is trained based on quantities of image features present in an image to classify whether or not a camera 10 is occluded. The training of the decision tree models is as such well-known.

Then, when quantities of features in the first information 16 or in the set 16 of the features of the image data 12 respectively are obtained, they may be passed to the decision tree model as input data such that the random forest model may classify based on its decision tree whether or not the camera 10 is occluded. The decision tree of the decision tree model may consider at each internal node a corresponding feature quantity and decide, which branch of the tree to follow, based on the feature quantity. This process continues until a leaf node of the decision tree of the decision tree model is reached, the leaf node providing a corresponding classification answer, i.e. occluded camera 10 or not occluded camera 10. The making of predictions by use of a decision tree model is as such known.

Thus, the statistical model 19 provides an assessment, based on the second information indicative of quantities of features in the first information 16 indicative of features in the image data 12, whether or not at least a portion of the camera 10 is occluded.

The assessment on whether or not at least a portion of the camera 10 is occluded may be performed quickly in real time with reduced processing and storage resources. The camera 10 captures one current image. The image features 16 may be extracted quickly by at least one image feature extraction process, wherein, if more than one feature extraction process is used, the respective feature extraction processes used may be used at least partially in parallel, which accelerates the feature extraction. The statistical model 19 may decide quickly based on image feature quantities whether or not the camera 10 is occluded because no detailed analysis of the extracted image features 16 is required.

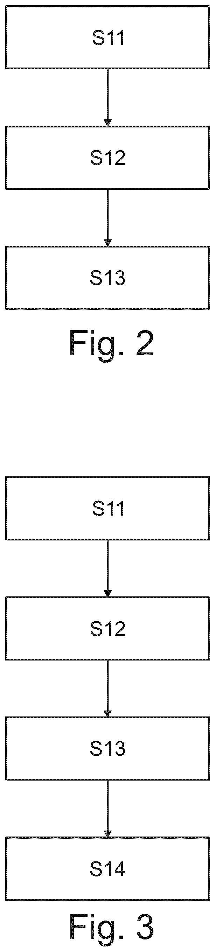

Figure 2 shows steps of a method for detecting occlusion of the camera 10 according to an example of the present disclosure.

In step S11 of Figure 2, the image data 12 indicative of an image captured by the camera 10 is obtained. In step S12, a first information 16 indicative of features in the image data 12 is extracted from the image data 12. In step S13, it is assessed by the statistical model 19, whether or not at least a portion of the camera 10 is occluded based on a second information indicative of quantities of features in the first information 16.

Figure 3 shows steps of a method for monitoring functionality of the camera 10 according to an example of the present disclosure. The functionality of the camera 10 may be monitored at different points of time. For example, it may be monitored periodically or at predetermined points of time for ensuring that the camera 10 is functioning correctly.

The steps S11, S12, and S13 of the method for monitoring functionality of the camera 10 correspond to steps S11, S12, and S13 of the method of Figure 2, which is indicated in Figure 3 by the same reference signs. However, the method for monitoring functionality of the camera 10 of Figure 13 comprises an additional step S14, in which an output of an indication of presence of an occluded camera 10 is caused if the assessment in step S13 indicates that at least a portion of the camera 10 is occluded. The indication may be arranged in any one of appropriate ways and may be an audio indication and/or a visual indication.

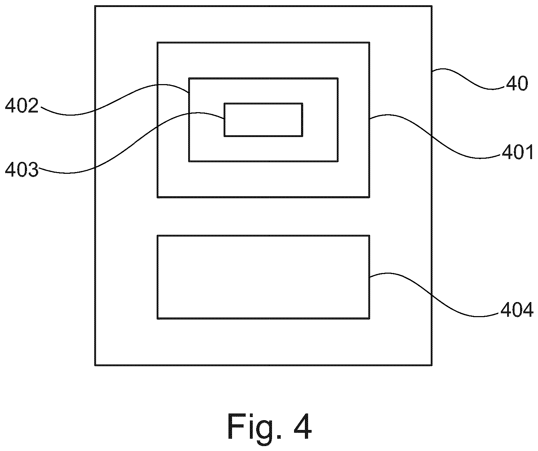

Figure 4 shows an arrangement of a data processing apparatus 40 according to an example of the present disclosure. The data processing apparatus 40 may be arranged for carrying steps of the method of Figure 2 and/or for carrying steps of the method of Figure 3.

The data processing apparatus 40 may comprise a data storage unit 401 and a data processing unit 404.

The data storage unit 401 may comprise a computer-readable storage medium 402.

On the computer-readable storage medium 402, there may be provided a computer program 403.

The computer program 403 and, thus, also the computer-readable storage medium 402, may comprise instructions which, when executed by the data processing unit 404, or, more generally speaking, a computer, cause the computer or the data processing unit 404 to carry out steps of the method of Figure 2 and/or steps of the method of Figure 3.

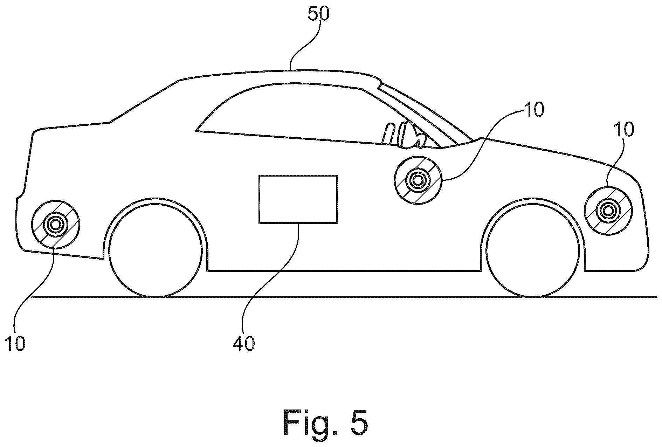

Figure 5 shows an arrangement of a vehicle 50 according to an example of the present disclosure.

According to Figure 5, the vehicle 50 comprises at least one camera 10. Each one of the at least one camera 10 may be mounted on or in the vehicle 50. Further, the vehicle 50 comprises the data processing apparatus 40. The data processing apparatus 40 of the vehicle 50 may perform the steps of the method of Figure 2 for detecting whether at least one of the cameras 10 of the vehicle 50 is occluded. As described above, the detecting may be performed in real time. Further, the data processing apparatus 40 of the vehicle 50 may perform the steps of the method of Figure 3 and may, thereby, perform monitoring of functionalities of the at least one camera 10 of the vehicle 50. In case of detecting that a camera 10 of the vehicle 50 is occluded, the data processing apparatus 40 may cause an output of an indication of presence of the occluded camera 10 to the driver of the vehicle 50. The indication may indicate, which one of the cameras 10 of the vehicle 50 is occluded. Thereby, the driver of the vehicle 50 may receive quickly and in real time information on malfunctioning of the respective camera 10 in the vehicle 50.

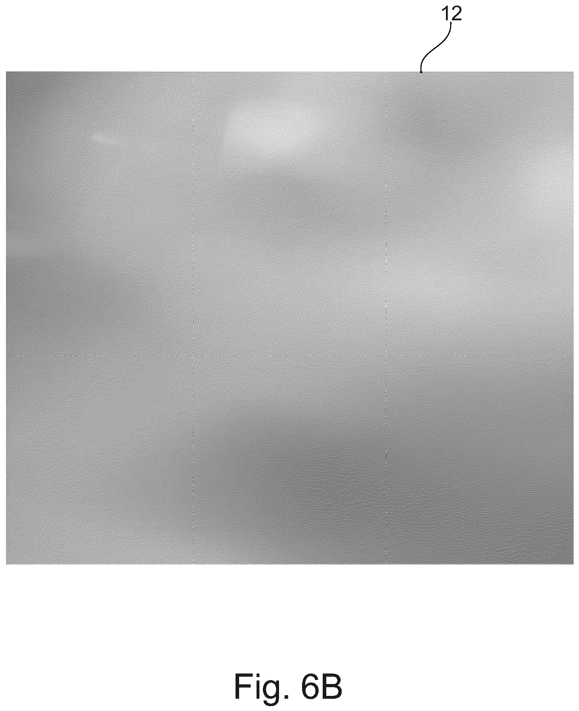

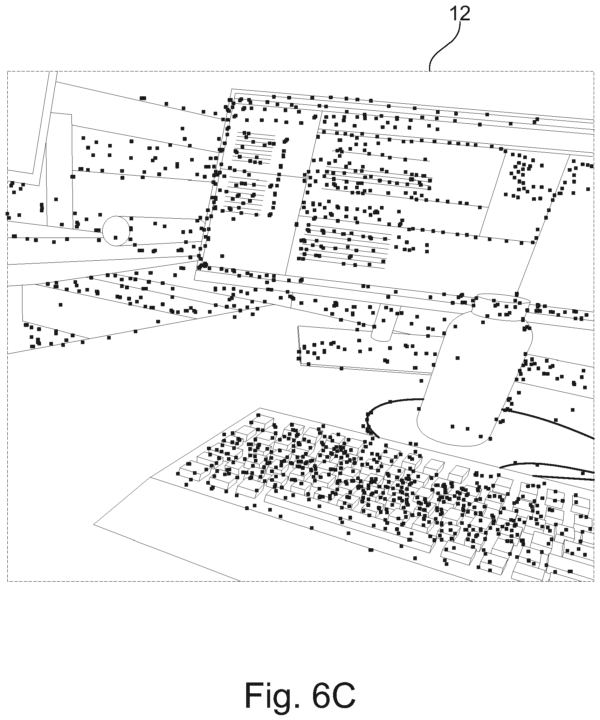

Figures 6A, 6B, and 6C show exemplary images used for determining whether the camera 10 that captured the respective image 12 is occluded or not.

The image 12 in Figure 6A shows the interior of a vehicle such as the vehicle 50. The camera 10 that captured the image 12 is mounted inside the vehicle 50. From the image 12 in Figure 6A, 1404 features 16 could be extracted. The extracted features 16 are exemplary indicated by dots in the image 12 of Figure 6A. The statistical model 19 determined based on the features 16 correctly that the camera 10 that captured said image 12 is not occluded because the amount/number of the extracted features 16 is greater than a threshold amount/number of features. The threshold amount/number of features may be a pre-determined amount/number of features that may be determined when training the statistical model 19. For example, the statistical model 19 may be trained with different images of vehicle's interior. During the training, the minimum amount/number of features can be found out/determined that should be present in an image captured by a not occluded camera 10 and showing the interior of the vehicle. The determined minimum amount/number of features may then be determined/set as the threshold amount/number of features.

In the examples of Figures 6A, 6B, and 6C, the second information indicative of quantities of features in the first information 16 represents the amount/number of features extracted in the image/image data 12 captured 11 by the respective camera 10.

The image 12 in Figure 6B shows an exemplary image that is captured by an occluded camera 10. Zero features 16 could be extracted from said image 12 and the statistical model 19 correctly determined that the camera 10 that captured the image 12 of Figure 6B is occluded.

The image 12 of Figure 6C shows an exemplary image 12 captured by a camera 10 that is installed in an office. In the image, 3751 features 16 could be extracted and the statistical model 19 determined based on the features 16 correctly that the camera 10 that captured said image 12 is not occluded. The extracted features 16 are exemplary indicated by dots in the image of Figure 6C. The determination that the camera 10 is not occluded is also here because the amount/number of the extracted features 16 is greater than a threshold amount/number of features. Also in the example of Figure 6C, the threshold amount/number of features may be a pre-determined amount/number of features. Also in the example of Figure 6C, the threshold amount/number of features may be determined when training the statistical model 19. The statistical model 19 may be trained with different images of the office. During the training, the minimum amount/number of features can be found out/determined that should be present in an image 12 captured by a not occluded camera 10 and showing the office. The determined minimum amount/number of features may then be determined/set as the threshold amount/number of features.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: camera
- 11: obtaining image data
- 12: image data
- 13: passing image data to at least one feature extraction process or tool
- 14: feature extraction process or tool
- 15: extraction of first information indicative of features in the image data by at least one feature extraction process or tool
- 16: first information indicative of features in the image data
- 17: extracting/obtaining the first information from the image data
- 18: provision of the first information indicative of features in the image data to a statistical model
- 19: statistical model
- S 11: obtaining image data indicative of an image captured by camera
- S 12: extracting information indicative of features in the image data
- S 13: assessing whether or not at least a portion of a camera is occluded
- S 14: causing an output of an indication of presence of occluded camera
- 40: data processing apparatus
- 401: data storage unit
- 402: computer-readable storage medium
- 403: computer program
- 404: data processing unit
- 50: vehicle

## Claims

1. A method for detecting occlusion of a camera (10), wherein the method comprises:
- obtaining (S11) image data (12) indicative of an image captured by the camera (10);
- extracting (S12), from the image data (12), of a first information (16) indicative of features in the image data (12); and
- assessing (S13), by a statistical model (19), whether or not at least a portion of the camera (10) is occluded based on a second information indicative of quantities of features in the first information (16).

2. The method according to claim 1, wherein the camera (10) is mounted on or in a vehicle (50).

3. The method according to claim 1 or 2, wherein:
- the features in the image data (12) are image features; and/or
- the features in the image data (12) are features of different types of image features; and/or
- a quantity of the quantities of features in the first information (16) indicates a number of features that are of at least one particular type of image features.

4. The method according to claim 3, wherein the different types of image features comprise at least one of the following types: edges, corners, textures, shapes, colors, transform-based features, local feature descriptors, interest points, and/or objects.

5. The method according to any one of the preceding claims, wherein the statistical model (19) assesses that at least a portion of the camera (10) is occluded by comparing a quantity of a set of the quantities of features with a corresponding threshold for the respective quantity.

6. The method according to any one of the preceding claims, wherein the statistical model (19) is a Bayesian statistical model, a random forests model, or a decision tree model.

7. The method according to any one of the preceding claims, wherein the feature extraction is performed using at least one of a group of feature extraction processes.

8. The method according to claim 7, wherein the group of feature extraction processes comprises at least one of the following: MinEigen, BRISK, FAST, Harris, LBP, GLCM, HOG, Gabor, SIFT, SURF, BRIEF, ORB, HSV, YCbCr, LAB, Canny, Sobel, Laplacian, Shi-Tomasi, FFT, DCT, DWT, RANSAC, KLT, PCA, t-SNE, UMAP, CNN, ResNet, VGG, YOLO, RCNN, UNet, OF, STIP, FD, ZFD, HOG, FAST, BRIEF, ORB, HSV, and/or MSER.

9. A method for monitoring functionality of a camera (10) by performing the steps of a method according to any one of the preceding claims, wherein the method further comprises causing (S14) an output of an indication of presence of an occluded camera (10) if the assessment indicates that at least a portion of the camera (10) is occluded.

10. A data processing apparatus (40) comprising means for carrying out the steps (S11, S 12, S 13, S14) of a method according to any one of the preceding claims.

11. A computer program (403) comprising instructions which, when the program is executed by a computer, cause the computer to carry out the steps (S11, S12, S13, S14) of a method of any one of claims 1 to 9.

12. A computer-readable storage medium (402) comprising instructions which, when executed by a computer, cause the computer to carry out the steps (S11, S12, S13, S14) of a method according to any one of claims 1 to 9.

13. A vehicle comprising a camera (10) and a processing apparatus (40) according to claim 10.

## Amended claims

### Amended claims in accordance with Rule 137(2) EPC.

1. A method for detecting occlusion of a camera (10), wherein the method comprises:
- obtaining (S11) image data (12) indicative of an image captured by the camera (10);
- extracting (S12), from the image data (12), of a first information (16) indicative of features in the image data (12); and
- assessing (S13), by a statistical model (19), whether or not at least a portion of the camera (10) is occluded based on a second information indicative of quantities of features in the first information (16), wherein the statistical model (19) assesses that at least a portion of the camera (10) is occluded by comparing a quantity of a set of the quantities of features with a corresponding threshold for the respective quantity.

2. The method according to claim 1, wherein the camera (10) is mounted on or in a vehicle (50).

3. The method according to claim 1 or 2, wherein:
- the features in the image data (12) are image features; and/or
- the features in the image data (12) are features of different types of image features; and/or
- a quantity of the quantities of features in the first information (16) indicates a number of features that are of at least one particular type of image features.

4. The method according to claim 3, wherein the different types of image features comprise at least one of the following types: edges, corners, textures, shapes, colors, transform-based features, local feature descriptors, interest points, and/or objects.

5. The method according to any one of the preceding claims, wherein the statistical model (19) is a Bayesian statistical model, a random forests model, or a decision tree model.

6. The method according to any one of the preceding claims, wherein the feature extraction is performed using at least one of a group of feature extraction processes.

7. The method according to claim 7, wherein the group of feature extraction processes comprises at least one of the following: MinEigen, BRISK, FAST, Harris, LBP, GLCM, HOG, Gabor, SIFT, SURF, BRIEF, ORB, HSV, YCbCr, LAB, Canny, Sobel, Laplacian, Shi-Tomasi, FFT, DCT, DWT, RANSAC, KLT, PCA, t-SNE, UMAP, CNN, ResNet, VGG, YOLO, RCNN, UNet, OF, STIP, FD, ZFD, HOG, FAST, BRIEF, ORB, HSV, and/or MSER.

8. A method for monitoring functionality of a camera (10) by performing the steps of a method according to any one of the preceding claims, wherein the method further comprises causing (S14) an output of an indication of presence of an occluded camera (10) if the assessment indicates that at least a portion of the camera (10) is occluded.

9. A data processing apparatus (40) comprising means for carrying out the steps (S11, S12, S13, S14) of a method according to any one of the preceding claims.

10. A computer program (403) comprising instructions which, when the program is executed by a computer, cause the computer to carry out the steps (S11, S12, S13, S14) of a method of any one of claims 1 to 9.

11. A computer-readable storage medium (402) comprising instructions which, when executed by a computer, cause the computer to carry out the steps (S11, S12, S13, S14) of a method according to any one of claims 1 to 9.

12. A vehicle comprising a camera (10) and a processing apparatus (40) according to claim 10.
